# EUROPÄISCHE PATENTANMELDUNG

(11) **EP 1 655 129 A1**
(43) Veröffentlichungstag der Anmeldung: **10.05.2006**
(21) Anmeldenummer: 05007376.6
(22) Anmeldetag: 05.04.2005
(51) Int. Cl.: B32B 15/10, B32B 15/06, B32B 9/02

(54) **Verbundelement, insbesondere Verbundplatte, und Türblatt**

(30) Priorität: 07.09.2004 DE 202004014044 U
(71) Anmelder: Micus, Alfred, 37671 Höxter (DE)
(72) Erfinder: Micus, Alfred, 37671 Höxter (DE)
(74) Vertreter: Schröer, Gernot H.

(57) **Zusammenfassung**

Verbundelement, insbesondere Verbundplatte (10), insbesondere ausgebildet und bestimmt für den Türenbau und/oder den Innenausbau, umfassend
a) mindestens eine Trägerlage(11), insbesondere gebildet aus Fasermaterial, vorzugsweise aus MDF und/oder HDF und/oder Hartfaser und/oder Biofaser, und/oder aus Dünnspan,
b) mindestens eine Kork- und/oder Gummikorklage (12), und
c) mindestens eine Aluminiumlage (13), insbesondere gebildet aus Aluminiumblech und/oder Aluminiumfolie

## Beschreibung

Die Erfindung betrifft ein Verbundelement, insbesondere eine Verbundplatte, insbesondere ausgebildet und bestimmt für den Türenbau und/oder den Innenausbau, sowie ein Türblatt.

Im Türenbau, insbesondere bei Innen- und Wohnungstüren, werden üblicherweise die Materialien Holz, Glas und Kunststoff verwendet. Die hieraus gebildeten Türen weisen schlechte Brandschutz-, Schallschutz- und Wärme- bzw. Kältedämmungseigenschaften auf.

Der Erfindung liegt daher die Aufgabe zugrunde, ein Verbundelement, insbesondere eine Verbundplatte, anzugeben, die insbesondere für den Türenbau ausgebildet, aber auch für den Innenausbau geeignet ist und die gegenüber den herkömmlichen im Türenbau, aber auch im Innenausbau verwendeten Bauelementen verbesserte Brandschutz-, Schallschutz- und Wärme- bzw. Kältedämmeigenschaften aufweist.

Diese Aufgabe wird gemäß der Erfindung durch ein Verbundelement mit den Merkmalen des Anspruches 1 sowie durch ein Türblatt mit den Merkmalen des Anspruch 7 gelöst. Vorteilhafte Ausgestaltungen und Weiterbildungen sind in den abhängigen Ansprüchen angegeben.

Die Erfindung sieht gemäß Anspruch 1 ein Verbundelement, insbesondere eine Verbundplatte vor, die insbesondere ausgebildet und bestimmt ist für den Türenbau und/oder den Innenausbau, und die umfasst
a) mindestens eine Trägerlage, insbesondere gebildet aus Fasermaterial, vorzugsweise aus MDF und/oder HDF und/oder Hartfaser und/oder Biofaser, und/oder aus Dünnspan,
b) mindestens eine Kork- und/oder Gummikorklage, und
c) mindestens eine Aluminiumlage, insbesondere gebildet aus Aluminiumblech und/oder Aluminiumfolie.

Unter Gummikork ist dabei eine gepresste Mischung aus Gummi (oder allgemein: Elastomeren) und Kork bzw. Gummi- und Korkgranulat zu verstehen, gepresst insbesondere in Plattenform.

Neben den vorgenannten Materialien der Trägerlage kommen additiv oder alternativ auch Holz und/oder Gipskarton in Betracht.

Bei der vorgenannten Korklage kann es sich beispielsweise um eine Presskorklage handeln.

Die mit der Erfindung erzielten Vorteile bestehen zum einen im verbesserten Schall- und Brandschutz, der sich aus der Kork- bzw. Gummikorklage ergibt. Darüber hinaus verbessert diese Lage die thermische Isolierung. Zum anderen bestehen die Vorteile der Erfindung in einer Verbesserung der Klimaschutzeigenschaften des Verbundelements, beispielsweise der Wärmedämmungs- bzw. Kältedämmungseigenschaften. Diese Verbesserung ergibt sich aus der Aluminiumlage. Gleichzeitig wird durch die Aluminiumlage eine Dampfsperrfunktion verwirklicht, ohne dass hierfür eine zusätzliche Dampfsperrfolie vorgesehen werden muss. Die Aluminiumlage ersetzt somit eine zusätzliche Dampfsperrfolie.

Insgesamt weist ein derartiges Verbundelement somit neben guten Schall-und Klimaschutzeigenschaften auch hervorragende Brand- und Rauchschutzeigenschaften auf. Wird ein derartiges Verbundelement, insbesondere als Verbundplatte, im Türenbau eingesetzt, so lassen sich dadurch vollwandige Türen herstellen, deren Eigenschaften im Vergleich zu herkömmlichen vollwandigen Türen deutlich verbessert sind. Insbesondere verbessert eine derartige Türkonstruktion die Brand- und Rauchschutzeigenschaften sowie die Schallschutzeigenschaften und die thermische Isolierung der Tür.

Der entscheidende Vorteil der Erfindung liegt somit darin, dass die Verbundplatte alle genannten Eigenschaften und deren Verbesserung in sich vereinigt, was keine der Einzelkomponenten für sich alleine kann.

Eine vorteilhafte Ausbildung sieht vor, dass bei dem Verbundelement bzw. der Verbundplatte die Lagen in Sandwichstruktur angeordnet sind. Hierunter ist zu verstehen, dass sich Trägerlage, Kork- und/oder Gummikorklage und gegebenenfalls auch die Aluminiumlage flächig über die gesamte Fläche des Verbundelements bzw. der Verbundplatte erstrecken. Dabei kann sich die Dicke bzw. Stärke der Lagen über die Fläche verändern. Zweckmäßig und bevorzugt ist jedoch, wenn die Lagen im Wesentlichen eine gleichbleibende Dicke bzw. Stärke über die gesamte flächige Erstreckung hinweg aufweisen. Auch das gesamte Verbundelement (bzw. die Verbundplatte) sollte im Wesentlichen über seine gesamte flächige Erstreckung im Wesentlichen eine gleichbleibende Dicke bzw. Stärke aufweisen.

Bevorzugt ist ferner, wenn die Aluminiumlage zwischen der Trägerlage und der Kork- und/oder Gummikorklage angeordnet ist, d. h. eine Zwischenlage bildet.

Gemäß einer vorteilhaften Weiterbildung des Verbundelements bzw. der Verbundplatte sind die Lagen fest und/oder dauerhaft miteinander verbunden, insbesondere miteinander verklebt, vorzugsweise mittels Weißleim und/oder Kaurit. Dadurch wird die stabile und dauerhafte Ausbildung des Verbundelements bzw. der Verbundplatte gewährleistet.

Zweckmäßigerweise sind die einzelnen Lagen gebildet aus Platten der jeweiligen Materialien, die bevorzugt miteinander verklebt sind, insbesondere durch Verpressung in einem Heißverfahren.

Eine zweckmäßige Ausgestaltung sieht vor, dass die Dicke bzw. Stärke der Trägerlage zwischen 1,0 und 10,0 mm liegt, insbesondere zwischen 1,6 und 6,0 mm, vorzugsweise bei etwa 2,0 mm.

Die Dicke bzw. Stärke der Kork- bzw. Gummikorklage kann zweckmäßigerweise zwischen 1,5 und 4,0 mm liegen, insbesondere zwischen 2,0 bis 3,0 mm, vorzugsweise bei etwa 2,5 mm.

Die Dicke bzw. Stärke der Aluminiumlage kann zweckmäßigerweise zwischen 0,25 und 0,50 mm oder zwischen 0,001 mm und 0,02 mm, insbesondere bei etwa 0,01 mm, liegen. Im ersten Fall ist sie insbesondere aus einem Aluminiumblech gebildet, im zweiten Fall aus einer Aluminiumfolie.

Insgesamt wird damit somit ein Verbundelement, insbesondere eine Verbundplatte, angegeben, das im Vergleich zu den üblicherweise im Türenbau und/oder im Innenausbau verwendeten Materialien bzw. Bauelementen deutlich verbesserte Schall-, Brand-, Rauch- und/oder Klimaschutzeigenschaften aufweist.

Die Erfindung sieht ferner gemäß Anspruch 7 ein Türblatt vor, das mindestens ein Verbundelement umfasst, insbesondere ein Verbundelement gemäß den vorstehenden Ausführungen, wobei das Verbundelement umfasst
a) mindestens eine Trägerlage, insbesondere gebildet aus Fasermaterial, vorzugsweise aus MDF und/oder HDF und/oder Hartfaser und/oder Biofaser, und/oder aus Dünnspan, und
b) mindestens eine Kork- und/oder Gummikorklage.

Die Vorteile dieses Türblattes ergeben sich aus dem Schichtaufbau des Verbundelements. Diesbezüglich wird daher auf die vorstehenden Ausführungen verwiesen.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

### Hierbei zeigt

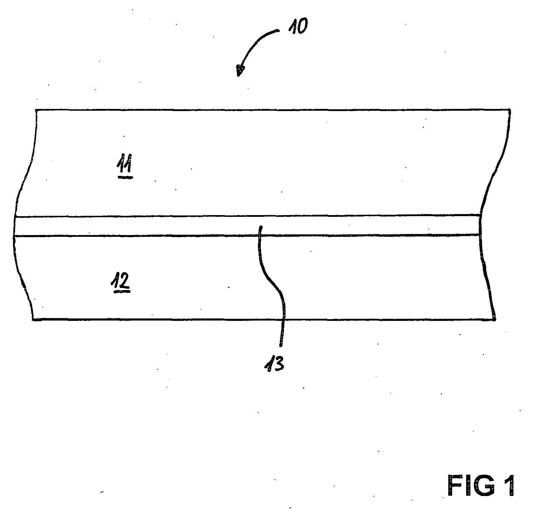

Fig. 1 schematisch in einer nicht maßstabsgetreuen Schnittdarstellung den Aufbau eines Ausführungsbeispiels einer Verbundplatte gemäß der Erfindung.

Die Verbundplatte 20 gemäß Fig. 1 umfasst eine Trägerlage 11 aus MDF und/oder HDF und/oder Hartfaser und/oder Dünnspan sowie eine Kork- oder Gummikorklage 12. Zwischen der Trägerlage 11 und der Kork- bzw. Gummikorklage 12 ist eine Aluminiumlage 13 ausgebildet, beispielsweise aus einem Aluminiumblech bzw. einer Aluminiumfolie. Die einzelnen Lagen 11, 12, 13 sind in Sandwichform, d.h. flächig, übereinander angeordnet. Jede Lage 11, 12, 13 erstreckt sich über die gesamte Fläche der Verbundplatte 10.

Die einzelnen Lagen 11, 12, 13 sind fest und dauerhaft miteinander verbunden, beispielsweise mittels Weißleim oder Kaurit.

Die Herstellung de Verbundplatte 10 erfolgt beispielsweise durch Verpressung in einem Heißverfahren, d.h. bei erhöhten Temperaturen. Die Presszeit liegt üblicherweise bei etwa 4 Minuten.

Zweckmäßigerweise werden die Abmessungen der Verbundplatte 10 entsprechend üblicher Türformate gewählt. Es können aber auch Sonderformate hergestellt werden. Herkömmliche Verfahren erlauben beispielsweise Sonderformate bis maximal 3.000 mm Länge und 2.100 mm Breite.

Die Verbundplatte 10 wird üblicherweise derart verwendet, dass die Trägerlage 11 einer Außenseite zugewandt ist. Bei Verwendung in einer Tür bzw. beim Innenausbau ist die Trägerlage 11 der Verbundplatte 10 somit dem jeweiligen Raum zugewandt, d.h. bildet die Oberseite der Tür bzw. der herzustellenden Wand. Die Kork- bzw. Gummikorklage 12 der Verbundplatte 10 ist hingegen nach Fertigstellung der Tür bzw. Wand üblicherweise von einem Betrachter nicht zu sehen.

Die Stärke bzw. Dicke der Trägerlage 11 der Verbundplatte 10 liegt zwischen 1,0 und 10,0 mm, insbesondere bei 1,6 bis 6,0 mm, vorzugsweise bei etwa 2,0 mm. Die Stärke bzw. Dicke der Kork- bzw. Gummikorklage 12 der Verbundplatte 10 liegt zwischen 1,5 und 4,0 mm, insbesondere zwischen 2,0 und 3,0 mm, vorzugsweise bei etwa 2,5 mm. Die Stärke der Aluminiumlage 13 der Verbundplatte 10 liegt bei einer Verwendung eines Aluminiumblechs zwischen 0,25 und 0,50 mm, bei Verwendung einer Aluminiumfolie zwischen 0,001 mm und 0,02 mm, vorzugsweise bei etwa 0,01 mm.

### Bezugszeichenliste

- 10: Verbundplatte
- 11: Trägerlage
- 12: Kork- bzw. Gummikorklage
- 13: Aluminiumlage

## Patentansprüche

1. Verbundelement, insbesondere Verbundplatte, insbesondere ausgebildet und bestimmt für den Türenbau und/oder den Innenausbau, umfassend
a) mindestens eine Trägerlage, insbesondere gebildet aus Fasermaterial, vorzugsweise aus MDF und/oder HDF und/oder Hartfaser und/oder Biofaser, und/oder aus Dünnspan,
b) mindestens eine Kork- und/oder Gummikorklage, und
c) mindestens eine Aluminiumlage, insbesondere gebildet aus Aluminiumblech und/oder Aluminiumfolie.

2. Verbundelement, insbesondere Verbundplatte, nach einem der vorhergehenden Ansprüche, bei dem die Lagen in Sandwichstruktur angeordnet sind, wobei insbesondere die Aluminiumlage zwischen der Trägerlage und der Kork- und/oder Gummikorklage angeordnet ist.

3. Verbundelement, insbesondere Verbundplatte, nach einem der vorhergehenden Ansprüche, bei dem die Lagen fest und/oder dauerhaft miteinander verbunden sind, insbesondere miteinander verklebt sind, vorzugsweise mittels Weißleim und/oder Kaurit.

4. Verbundelement, insbesondere Verbundplatte, nach einem der vorhergehenden Ansprüche, bei dem die Dicke der Trägerlage zwischen 1,0 und 10,0 mm liegt, insbesondere zwischen 1,6 und 6,0 mm, vorzugsweise bei etwa 2,0 mm.

5. Verbundelement, insbesondere Verbundplatte, nach einem der vorhergehenden Ansprüche, bei dem die Dicke der Kork- bzw. Gummikorklage zwischen 1,5 und 4,0 mm liegt, insbesondere zwischen 2,0 bis 3,0 mm, vorzugsweise bei etwa 2,5 mm.

6. Verbundelement, insbesondere Verbundplatte, nach einem der vorhergehenden Ansprüche, bei dem die Dicke der Aluminiumlage zwischen 0,25 und 0,50 mm oder zwischen 0,001 mm und 0,02 mm, insbesondere bei etwa 0,01 mm, liegt.

7. Türblatt, umfassend mindestens ein Verbundelement, insbesondere nach einem der vorhergehenden Ansprüche, wobei das Verbundelement umfasst
a) mindestens eine Trägerlage, insbesondere gebildet aus Fasermaterial, vorzugsweise aus MDF und/oder HDF und/oder Hartfaser und/oder Biofaser, und/oder aus Dünnspan, und
b) mindestens eine Kork- und/oder Gummikorklage.
